# FASCICULE DE BREVET EUROPEEN

(11) **EP 1 103 747 B1**
(45) Date de publication et mention de la délivrance du brevet: **29.03.2006**
(21) Numéro de dépôt: 00403248.8
(22) Date de dépôt: 21.11.2000
(51) Int. Cl.: F16J 15/50, F16K 41/00, F24C 3/10, F24C 3/12, F16J 15/02, H01H 13/06

(54) **Joint souple d'étanchéité**
Flexible Dichtung
Flexible sealing

(30) Priorité: 26.11.1999 FR 9914930
(43) Date de publication de la demande: 30.05.2001
(73) Titulaire: Brandt Industries, 92500 Rueil Malmaison (FR)
(72) Inventeur: Nodet, Alain, 94117 Arcueil Cedex (FR)
(74) Mandataire: Santarelli

(56) Documents cités:
- CH-A- 266 227
- DE-A- 3 814 695
- GB-A- 427 657
- US-A- 3 436 165
- US-A- 4 712 802
- US-A- 5 525 771

## Description

L'invention concerne le domaine des joints souples d'étanchéité, notamment des joints souples d'étanchéité pour robinets gaz. Les robinets gaz sont préférentiellement des robinets gaz alimentant des brûleurs gaz utilisés dans des fours de cuisson domestique ou dans des tables de cuisson domestique.

Selon un art antérieur, notamment dans le domaine des robinets gaz, il existe des dispositifs comportant une ou plusieurs pièces rigides en plus d'un joint souple d'étanchéité, ces pièces rigides étant destinées à la transmission d'efforts lors de l'actionnement de la manette de commande du robinet gaz Un joint souple d'étanchéité apte à la transmission d'efforts est connu du document DE-A1-3 814 695. Un inconvénient des dispositifs de l'art antérieur est d'être complexe et d'utiliser de nombreuses pièces.

L'invention propose l'utilisation d'un joint souple d'étanchéité de structure particulière capable d'améliorer la transmission des efforts, rendant par conséquence superflues tout ou partie des pièces additionnelles destinées à la transmission d'efforts dans les dispositifs de l'art antérieur. L'invention concerne également des robinets gaz à structure particulière, incorporant un joint souple d'étanchéité selon l'invention.

On connaît en particulier un joint de fixation tel que décrit dans le document US 4 712 802 qui peut être assemblé avec un moyen de fixation à tête de fixation. Toutefois, un tel joint ne permet pas de transmettre des efforts.

Selon l'invention, il est prévu un joint souple d'étanchéité comportant un trou destiné à recevoir une tige montée en coulissement et en rotation par rapport à l'axe de la tige, une partie centrale située autour du trou et une lèvre extérieure située autour de la partie centrale et destinée à s'appuyer de manière étanche sur une surface sensiblement plane et sensiblement perpendiculaire à l'axe de la tige. Le joint comporte une partie intermédiaire située entre le trou et la lèvre extérieure.

La partie intermédiaire a une forme massive de largeur et de hauteur du même ordre de grandeur, la partie intermédiaire étant adaptée à être déplacée parallèlement à l'axe de la tige en direction de la surface, par déformation de la lèvre extérieure autour d'une extrémité reliée à la partie intermédiaire, de manière à transmettre des efforts parallèlement à l'axe de la tige.

L'invention sera mieux comprise et d'autres particularités et avantages apparaîtront à l'aide de la description ci-après et des dessins joints, donnés à titre d'exemples, où :
- la figure 1 représente, à l'échelle 2, une vue de face d'un mode de réalisation préférentiel d'un robinet gaz selon l'invention, incorportant un joint souple d'étanchéité selon l'invention ;
- la figure 2 représente, à l'échelle 5, une vue en coupe d'un mode de réalisation préférentiel d'un joint souple d'étanchéité selon l'invention ;
- la figure 3, représente à l'échelle 2, une vue en perspective d'un mode de réalisation préférentiel d'un joint souple d'étanchéité selon l'invention.

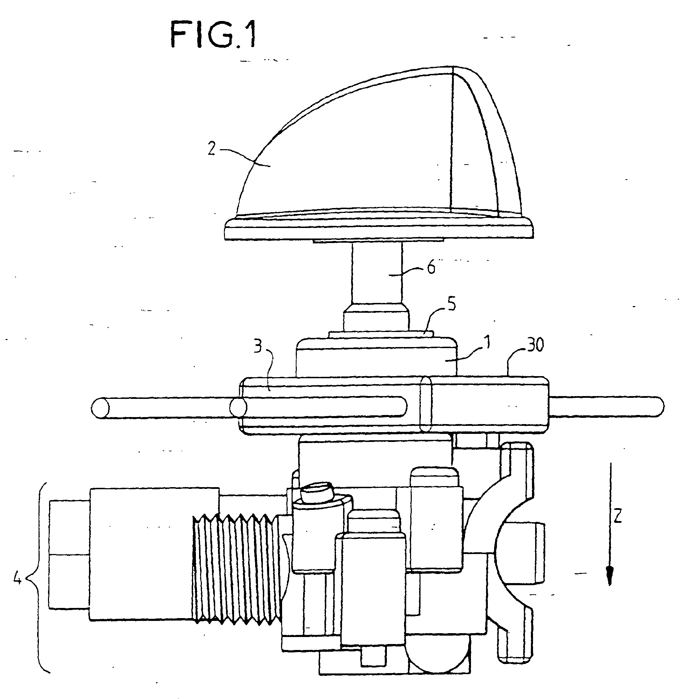

La figure 1 représente, à l'échelle 2, une vue de face d'un mode de réalisation préférentiel d'un robinet gaz selon l'invention, incorportant un joint souple d'étanchéité selon l'invention. Le domaine préférentiel d'application de l'invention concerne les robinets gaz alimentant des brûleurs gaz pour fours ou tables de cuisson domestique. Le robinet gaz comporte un conduit 4 de robinet à l'intérieur duquel circule du gaz. Dans certains cas, il circule dans le conduit 4 un mélange de gaz et d'air primaire atmosphérique. Le terme gaz sera utilisé dans toute la suite du texte, que ce soit du gaz, un mélange de gaz et d'air atmosphérique ou encore tout autre fluide gazeux. Le débit de gaz à l'intérieur du conduit 4 est régulé par une manette 2 de commande du robinet gaz. La manette 2 est reliée au conduit 4 par l'intermédiaire d'une tige 6.

Lorsque la manette 2 est actionnée, la tige 6 se déplace avec un mouvement combiné de coulissement le long de l'axe de la tige 6 et de rotation autour de l'axe de la tige 6. Le mouvement de rotation permet de régler le débit de gaz circulant à l'intérieur du conduit 4. Le mouvement de coulissement va permettre d'actionner un poussoir électrique 3 d'allumage. Le poussoir électrique 3 d'allumage est un interrupteur électrique qui est actionné par pression ou poussée et qui a pour fonction de commander le dispositif d'allumage proprement dit d'un brûleur gaz généralement associé au robinet gaz. Le brûleur gaz ainsi que son dispositif d'allumage ne sont pas représentés sur les figures. Le poussoir électrique 3 est situé autour de la tige 6, entre la manette 2 et le conduit 4.

Pour que le mouvement de la manette 2 et de la tige 6 associée puisse être transmis au poussoir électrique 3, un anneau 5 solidaire de la tige 6 est situé autour de la tige 6, entre la manette 2 et le poussoir électrique 3. L'anneau 5 est un anneau de transmission des efforts exercés selon une direction Z parallèle à l'axe de la tige 6. L'anneau 5 a de préférence une forme circulaire mais peut aussi prendre une forme carrée ou même toute autre forme, pourvu qu'il conserve une surface en regard du poussoir électrique 3 susceptible d'actionner le poussoir électrique 3, directement ou indirectement par l'intermédiaire d'un autre élément. L'anneau 5 est préférentiellement un anneau de type « Truarc » (marque déposée).

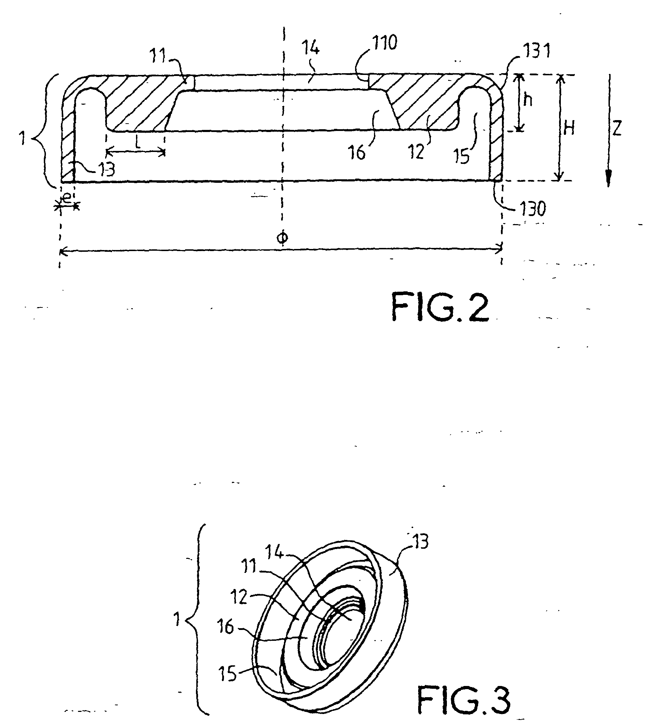

Afin d'assurer l'étanchéité du poussoir électrique 3 ou au moins de certaines parties sensibles du poussoir électrique 3, un joint souple d'étanchéité 1 est situé autour de la tige 6, entre l'anneau 5 et le poussoir électrique 3. Le joint souple d'étanchéité 1 possède une structure particulière qui sera détaillée au niveau de la figure 2 et qui lui permet d'assurer à la fois l'étanchéité du poussoir électrique 3 et la transmission d'efforts selon la direction Z de l'anneau 5 vers le poussoir électrique 3. La forme du joint souple d'étanchéité 1 est de préférence circulaire mais peut être carrée ou même autre, pourvu que cette forme permette au joint souple d'étanchéité 1 d'assurer sa double fonction d'étanchéité et de transmission d'efforts.

La figure 1 représente un robinet gaz avec une manette 2 en position de repos, c'est-à-dire en position non actionnée. Lorsque la manette 2 de commande du robinet gaz est actionnée, par exemple par poussée manuelle d'un utilisateur, l'anneau 5 solidaire de la tige 6 qui tourne autour de son axe et qui s'abaisse vers le conduit 4 s'abaisse également vers le conduit 4. L'anneau 5 appuie avec un effort de pression selon la direction Z sur le joint 1 lequel transmet cet effort de pression au poussoir électrique 3 qui est ainsi actionné. Le poussoir électrique 3 ferme des contacts électriques de commande d'un dipositif d'allumage d'un brûleur gaz lorsque le poussoir électrique 3 est ainsi actionné. Lorsque la manette 2 de commande est relachée, par exemple par l'utilisateur qui l'avait actionnée, elle remonte selon la direction Z en s'éloignant du conduit 4, ce qui amène la partie mobile du poussoir électrique 3 à être relachée et à remonter, ouvrant alors les contacts électriques de commande. Les remontées et les abaissements sont considérés par rapport au sens de la figure 1, étant entendu que l'utilisation du robinet gaz peut être faite avec une autre orientation que celle représentée sur la figure 1.

Le joint souple d'étanchéité 1 a une structure qui assure l'étanchéité du poussoir électrique au niveau de sa surface 30, en empêchant les liquides de passer entre la surface 30 et le joint 1, aussi bien lorsque la manette 2 est en position de repos que lorsque la manette 2 est actionnée. De préférence, le joint souple d'étanchéité 1 assure l'étanchéité au niveau de la tige 6, en empêchant les liquides de passer entre la tige 6 et le joint 1. Pour cela, le joint souple d'étanchéité 1 possède une partie centrale destinée à serrer la tige 6, cette partie centrale se présentant avantageusement sous la forme d'une lèvre intérieure serrant la tige 6. De préférence, la lèvre intérieure a une épaisseur et un diamètre qui sont choisis de manière à minimiser les frottements entre la tige 6 et le joint 1, tout en assurant une étanchéité acceptable, c'est-à-dire compatible avec la structure du poussoir électrique 3 dont la structure le rend moins sensible au passage d'un peu de liquide entre le joint 1 et la tige 6 qu'entre le joint 1 et la surface 30. La minimisation des frottements entre la tige 6 et le joint 1 permet aux frottements entre le joint 1 et la surface 30 du poussoir électrique 3 de devenir prépondérants et par conséquent d'empêcher le joint 1 de tourner sur la surface 30 lorsque la manette 2 est actionnée.

Le joint souple d'étanchéité 1 a une structure qui transmet un effort de pression suivant la direction Z, de l'anneau 5 vers le poussoir électrique 3. Le joint souple d'étanchéité 1 a une troisième fonction d'absorption des jeux mécaniques situés le long de l'axe de la tige 6. En effet, le joint souple d'étanchéité 1 a également une structure qui absorbe les jeux mécaniques situés le long de l'axe de la tige 6, c'est-à-dire situés selon la direction Z entre l'anneau 5 et le poussoir électrique 3, les jeux mécaniques correspondant à ces deux derniers éléments étant inclus. Ces jeux mécaniques peuvent provenir des tolérances de fabrication des différentes parties constituant le robinet gaz. Ces jeux mécaniques peuvent également provenir d'une différence de course entre la course de l'anneau 5 et de la tige 6 et la course de la partie mobile du poussoir électrique 3 sur laquelle vient appuyer l'anneau 5 solidaire de la tige 6 par l'intermédiaire du joint souple d'étanchéité 1, lorsque la manette 2 est actionnée. La surface 30 du poussoir électrique 3 reste, quant à elle, immobile lorsque la manette 2 est actionnée. La déformation du joint 1 permet l'absorption de ces jeux mécaniques. Dans un exemple numérique préférentiel, la différence de course entre la course de l'anneau 5 et la course de la partie mobile du poussoir électrique vaut environ 1 mm.

La figure 2 représente, à l'échelle 5, une vue en coupe d'un mode de réalisation préférentiel d'un joint souple d'étanchéité selon l'invention. Le joint souple d'étanchéité 1 représenté sur la figure 2 est le même que celui qui est représenté sur la figure 1. Le joint 1 comporte un trou 14 destiné à recevoir une tige, comme la tige 6 de la figure 1 par exemple. La tige 6 n'est pas représentée sur la figure 2, mais l'axe de la tige 6 est représenté en traits pointillés.

Le joint 1 comporte une partie centrale 11 située autour du trou 14: Autour du trou 14, est située une partie intermédiaire 12. Autour de la partie intermédiaire 12 est située une lèvre extérieure 13 ayant pour fonction d'assurer l'étanchéité au niveau de la surface surlaquelle elle est destinée à reposer, à savoir par exemple la surface 30 du poussoir électrique 3 représentée sur la figure 1, cette surface étant sensiblement plane et sensiblement perpendiculaire à l'axe de la tige 6. Plus cette surface sera plane et perpendiculaire à l'axe de la tige 6, meilleure sera la transmission d'efforts réalisée selon la direction Z parallèle à l'axe de la tige 6.

La partie intermédiaire 12 est de préférence située entre la partie centrale 11 et la lèvre extérieure 13. Cependant la partie intermédiaire 12 et la partie centrale 11 peuvent être confondues, auquel cas le décrochement 16 n'existe plus. De préférence, le décrochement 16 existe et présente l'intérêt de ne laisser au contact de la tige 6 qu'une lèvre intérieure 11 de surface de contact 110 réduite assurant une meilleure étanchéité que ne le ferait une partie centrale 11 massive comme la partie intermédiaire 12 représentée sur la figure 2. En effet, la lèvre intérieure 11 permet d'assurer une bonne étanchéité au niveau de la tige 6 par serrage, tout en minimisant les frottements entre la tige 6 et le joint 1 lorsque la manette 2 est actionnée afin d'éviter de faire tourner le joint 1. La lèvre intérieure 11 est une partie suffisamment étroite pour assurer une bonne étanchéité par contact entre sa surface 110 et la tige 6, mais elle peut prendre diverses formes, comme celle d'une double lèvre par exemple, tout comme la lèvre extérieure 13 dont le contact étanche avec la surface 30 du poussoir électrique 3 est assuré par la surface de contact de son extrémité libre 130.

La partie intermédiaire 12, préférentiellement située entre la lèvre intérieure 11 et la lèvre extérieure 13, est la partie du joint 1 qui assure, lorsque la manette 2 est actionnée, d'une part la fonction de transmission des efforts selon la direction Z entre l'anneau 5 et le poussoir électrique 3 situés de part et d'autre du joint 1, l'anneau 5 et le poussoir électrique 3 étant non représentés sur la figure 2, et d'autre part la fonction d'absorption des jeux mécaniques situés le long de l'axe de la tige 6, c'est-à-dire selon la direction Z, entre l'anneau 5 situé au-dessus du joint 1 sur la figure 2 et le poussoir électrique 3 situé au-dessous du joint 1 sur la figure 2, les jeux mécaniques liés à l'anneau 5 comme au poussoir électrique 3 étant inclus. Un jeu mécanique lié au poussoir électrique 3 est par exemple le jeu au niveau de la course de la partie mobile du poussoir électrique 3 sur laquelle vient appuyer la partie intermédiaire 12 du joint 1 lorsque la manette 2 est actionnée. La partie intermédiaire 12 du joint 1 est de préférence réalisée dans le même matériau souple que les autres parties du joint 1, à savoir les lèvres intérieure 11 et extérieure 13 assurant une fonction d'étanchéité. La partie intermédiaire 12 est d'une part suffisamment massive, c'est-à-dire présente une largeur l et une hauteur h suffisantes, pour réaliser cette transmission d'efforts parallèlement à l'axe de la tige 6, et d'autre part suffisamment déformable pour absorber ces jeux mécaniques situés le long de l'axe de la tige 6, au moins dans une certaine mesure. Une hauteur h suffisante ainsi qu'un matériau constitutif suffisamment souple conférenf à la partie intermédiaire 12 le caractère suffisamment déformable requis par l'application envisagée du joint souple d'étanchéité 1.

Entre la partie intermédiaire 12 et la lèvre extérieure 13, est de préférence situé un évidement 15 de manière à ce que, lorsque la manette 2 est actionnée et que la partie intermédiaire 12 s'abaisse en direction de la surface 30 du poussoir électrique 3, la déformation subie par la lèvre extérieure 13 se réalise surtout au niveau de son extrémité 131 reliée à la partie intermédiaire 12 tandis que la surface de contact de son extrémité libre 130 peu déformée conserve un bon contact étanche avec la surface 30 du poussoir électrique 3.

Dans une première réalisation préférentielle de la lèvre extérieure 13, la surface moyenne de la lèvre extérieure 13, verticale sur la figure 2, est parallèle à l'axe de la tige 6. La lèvre extérieure 13 est avantageusement une portion de cylindre ayant pour axe l'axe de la tige 6 dans le cas où le joint 1 est circulaire. Un avantage de cette forme de lèvre extérieure 13 est un encombrement minimum pour l'ensemble du joint 1.

Dans une deuxième réalisation préférentielle de la lèvre extérieure 13, l'extrémité libre 130 de la lèvre extérieure 13 est plus éloignée de l'axe de la tige 6 que l'extrémité 131 de la lèvre extérieure 13 reliée à la partie intermédiaire 12. La lèvre extérieure 13 est avantageusement une portion de cône ayant pour axe l'axe de la tige 6 dans le cas où le joint 1 est circulaire, la lèvre extérieure 13 étant reliée à la partie intermédiaire 12 par la partie la plus étroite du cône. Un avantage de cette forme de lèvre extérieure 13 est une meilleure étanchéité au niveau de la surface de contact de l'extrémité 130 de la lèvre extérieure 13 à cause d'un effet « parapluie » qui consiste dans le fait que les éventuels liquides coulant sur la lèvre extérieure 13 à l'extérieur du joint 1 ont tendance à s'éloigner de l'axe de la tige 6, une fois arrivés sur la surface 30 du poussoir électrique 3.

Dans l'exemple numérique préférentiel de la figure 2, le joint a un diamètre Φ valant environ deux centimètres et une hauteur H valant environ un demi centimètre. Mais, des joints de taille et de proportions différentes peuvent être utilisés, soit dans d'autres domaines d'application, soit dans le même domaine d'application des robinets gaz pour four ou table de cuisson domestique.

Préférentiellement, la hauteur h de la partie intermédiaire 12 vaut sensiblement la moitié de la hauteur H totale du joint 1.

Avantageusement, la hauteur h de la partie intermédiaire 12 est supérieure au triple de l'épaisseur e de la lèvre extérieure 13, ce qui comparativement à la lèvre extérieure 13, contribue à accentuer le caractère massif de la partie intermédiaire 12.

La largeur l et la hauteur h de la partie intermédiaire 12 sont préférentiellement du même ordre de grandeur, ce qui contribue aussi à accentuer le caractère massif de la partie intermédiaire 12.

Le joint souple d'étanchéité 1 est préférentiellement constitué par un seul matériau souple. Cependant, si les contraintes d'étanchéité et de transmission d'efforts se durcissent, il est possible de réaliser la partie intermédiaire 12 dans un autre matériau moins souple que le matériau utilisé pour réaliser les lèvres intérieure 11 et extérieure 13. Il est également possible de noyer un morceau de matériau dur au milieu de la partie intermédiaire 12 dont la périphérie serait alors réalisée dans le même matériau souple que les lèvres intérieure 11 et extérieure 13. Pour des forces relativement faibles, typiquement quelques newtons comme celle exercée par un utilisateur dans le domaine préférentiel des fours et tables de cuisson domestique, un même matériau unique souple pour tout le joint 1 convient et rend la fabrication du joint 1 plus simple.

Le matériau utilisé pour la réalisation du joint 1 est de préférence un matériau résistant à la température, typiquement à 100 degrés Celsius, et aux agents nettoyants corrosifs usuels utilisés pour le nettoyage d'un four ou d'une table de cuisson domestique. Le matériau utilisé est avantageusement du « silicone haute température ».

La figure 3 représente, à l'échelle 2, une vue en perspective du joint 1 représenté à l'échelle 5 sur la figure 2, sur laquelle sont visibles le trou central 14 et la succession à partir du trou central 14 vers la périphérie du joint 1, de la lèvre intérieure 11, de la partie intermédiaire 12 et de la lèvre extérieure 13.

## Revendications

1. Joint souple d'étanchéité comportant un trou (14) destiné à recevoir une tige (6) montée en coulissement et en rotation par rapport à l'axe de ladite tige (6), une partie centrale (11) située autour du trou (14) et une lèvre extérieure (13) située autour de la partie centrale (11) et destinée à s'appuyer de manière étanche sur une surface (30) sensiblement plane et sensiblement perpendiculaire à l'axe de la tige (6), le joint comportant une partie intermédiaire (12) située entre le trou (14) et la lèvre extérieure (10), **caractérisé en ce que** ladite partie intermédiaire a une forme massive de largeur (I) et de hauteur (h) du même ordre de grandeur, ladite partie intermédiaire (12) étant adaptée à être déplacée parallèlement à l'axe de la tige (6) en direction de ladite surface (30), par déformation de la lèvre extérieure (13) autour d'une extrémité (131) reliée à la partie intermédiaire (12), de manière à transmettre des efforts parallèlement à l'axe de la tige (6).

2. Joint selon la revendication 1, **caractérisé en ce que** le joint (1) comporte un évidement (15) situé entre la partie intermédiaire (12) et la lèvre extérieure (13).

3. Joint selon l'une des revendications 1 ou 2, **caractérisé en ce que** la partie centrale (11) est une lèvre intérieure destinée à serrer la tige (6) de manière étanche et **en ce que** la partie intermédiaire (12) est située entre la lèvre intérieure (11) et la lèvre extérieure (13).

4. Joint selon l'une des revendications 1 à 3, **caractérisé en ce que** la lèvre extérieure (13) est une portion de cylindre ayant pour axe l'axe de la tige (6).

5. Joint selon l'une quelconque des revendications 1 à 3, **caractérisé en ce que** l'extrémité libre (130) de la lèvre extérieure (13) est plus éloignée de l'axe de la tige (6) que l'extrémité (131) de la lèvre extérieure (13) reliée à la partie intermédiaire (12).

6. Joint selon la revendication 5, **caractérisé en ce que** la lèvre extérieure (13) est une portion de cône ayant pour axe l'axe de la tige (6), la lèvre extérieure (13) étant reliée à la partie intermédiaire (12) par la partie la plus étroite du cône.

7. Joint selon l'une quelconque des revendications 1 à 6, **caractérisé en ce que** le joint (1) a un diamètre (Φ) valant environ deux centimètres et une hauteur (H) valant environ un demi centimètre.

8. Joint selon l'une quelconque des revendications précédentes, **caractérisé en ce que** le joint (1) est constitué par un seul matériau qui est souple.

9. Joint selon l'une quelconque des revendications précédentes, **caractérisé en ce que** le matériau est du silicone haute température.

10. Joint selon l'une quelconque des revendications précédentes, **caractérisé en ce que** la hauteur (h) de la partie intermédiaire (12) vaut sensiblement la moitié de la hauteur totale (H) du joint (1).

11. Joint selon l'une quelconque des revendications précédentes, **caractérisé en ce que** la hauteur (h) de la partie intermédiaire (12) est supérieure au triple de l'épaisseur (e) de la lèvre extérieure (13).

12. Robinet gaz comportant une manette (2) de commande reliée au conduit (4) du robinet par une tige (6), ayant un mouvement combiné de coulissement le long de son axe et de rotation autour de son axe lorsque la manette (2) est actionnée, **caractérisé en ce que** le robinet comporte aussi, situés autour de la tige (6) et situés successivement de la manette (2) vers le conduit (4) du robinet : un anneau (5) solidaire de la tige (6), un joint (1) selon l'une quelconque des revendications précédentes, un poussoir électrique (3) d'allumage, une partie intermédiaire (12) du joint (1) étant adaptée à être déplacée parallèlement à l'axe de la tige (6) de manière à transmettre sur le poussoir électrique (3) les efforts exercés par l'anneau (5) selon une direction parallèle (Z) à la tige (6) lorsque la manette (2) est actionnée.

13. Robinet gaz selon la revendication 12, **caractérisé en ce que** le joint (1) comporte une lèvre intérieure (11) dont les dimensions sont telles que le joint (1) ne tourne pas autour de la tige (6) lorsque la manette (2) est actionnée.

## Patentansprüche

1. Nachgiebige Dichtung, mit einem Loch (14), das eine Stange (6) aufnehmen soll, welche bezüglich der Achse der Stange (6) gleitend und drehbar angebracht ist, einem Mittelteil (11), der um das Loch (14) angeordnet ist, und mit einer Außenlippe (13), die um den Mittelteil (11) angeordnet und dazu bestimmt ist, sich in dichter Weise an einer im Wesentlichen ebenen und zur Achse der Stange (6) im Wesentlichen senkrechten Oberfläche (30) abzustützen, wobei die Dichtung einen Zwischenteil (12) aufweist, der sich zwischen dem Loch (14) und der Außenlippe (13) befindet, **dadurch gekennzeichnet, dass** der Zwischenteil eine massive Form mit einer Breite (1) und einer Höhe (h) der gleichen Größenordnung besitzt, wobei der Zwischenteil (12) dazu geeignet ist, parallel zur Achse der Stange (6) zur Oberfläche (30) hin verlagert zu werden, indem die Außenlippe (13) um ein mit dem Zwischenteil (12) verbundenes Ende (131) verformt wird, so dass Kräfte parallel zur Achse der Stange (6) übertragen werden.

2. Dichtung nach Anspruch 1, **dadurch gekennzeichnet, dass** die Dichtung (1) zwischen dem Zwischenteil (12) und der Außenlippe (13) eine Vertiefung (15) aufweist.

3. Dichtung nach Anspruch 1 oder 2, **dadurch gekennzeichnet, dass** der Mittelteil (11) eine Innenlippe ist, die die Stange (6) in dichter Weise umklammern soll, und dass sich der Zwischenteil (12) zwischen der Innenlippe (11) und der Außenlippe (13) befindet.

4. Dichtung nach einem der Ansprüche 1 bis 3, **dadurch gekennzeichnet, dass** die Außenlippe (13) ein zylindrischer Abschnitt ist, dessen Achse die Achse der Stange (6) ist.

5. Dichtung nach einem der Ansprüche 1 bis 3, **dadurch gekennzeichnet, dass** das freie Ende (130) der Außenlippe (13) von der Achse der Stange (6) entfernter liegt als das mit dem Zwischenteil (12) verbundene Ende (131) der Außenlippe (13).

6. Dichtung nach Anspruch 5, **dadurch gekennzeichnet, dass** die Außenlippe (13) ein Kegelabschnitt ist, dessen Achse die Achse der Stange (6) ist, wobei die Außenlippe (13) über den schmalsten Teil des Kegels mit dem Zwischenteil (12) verbunden ist.

7. Dichtung nach einem der Ansprüche 1 bis 6, **dadurch gekennzeichnet, dass** die Dichtung (1) einen Durchmesser (Φ) von etwa zwei Zentimetern und eine Höhe (H) von etwa einem halben Zentimeter besitzt.

8. Dichtung nach einem der vorhergehenden Ansprüche, **dadurch gekennzeichnet, dass** die Dichtung (1) aus einem einzigen Material besteht, das nachgiebig ist.

9. Dichtung nach einem der vorhergehenden Ansprüche, **dadurch gekennzeichnet, dass** das Material Hochtemperatursilikon ist.

10. Dichtung nach einem der vorhergehenden Ansprüche, **dadurch gekennzeichnet, dass** die Höhe (h) des Zwischenteils (12) im Wesentlichen der Hälfte der Gesamthöhe (H) der Dichtung (1) entspricht.

11. Dichtung nach einem der vorhergehenden Ansprüche, **dadurch gekennzeichnet, dass** die Höhe (h) des Zwischenteils (12) größer ist als das Dreifache der Dicke (e) der Außenlippe (13).

12. Gashahn mit einem Steuergriff (2), welcher über eine Stange (6) mit der Leitung (4) des Hahns verbunden ist, wobei die Stange eine kombinierte Bewegung bestehend aus einem Gleiten entlang ihrer Achse und einer Drehung um ihre Achse ausführt, wenn der Griff (2) betätigt wird, **dadurch gekennzeichnet, dass** der Hahn um die Stange (6) herum und von dem Griff (2) zur Leitung (4) des Hahns nacheinander auch folgendes aufweist: einen fest mit der Stange (6) verbundenen Ring (5), eine Dichtung (1) nach einem der vorhergehenden Ansprüche, einen elektrischen Zündungsdruckknopf (3), wobei ein Zwischenteil (12) der Dichtung (1) dazu geeignet ist, parallel zur Achse der Stange (6) so verlagert zu werden, dass dem elektrischen Druckknopf (3) die von dem Ring (5) ausgeübten Kräfte entlang einer zur Stange (6) parallelen Richtung (Z) übertragen werden, wenn der Griff (2) betätigt wird.

13. Gashahn nach Anspruch 12, **dadurch gekennzeichnet, dass** die Dichtung (1) eine Innenlippe (11) aufweist, die so abgemessen ist, dass sich die Dichtung (1) nicht um die Stange (6) dreht, wenn der Griff (2) betätigt wird.

## Claims

1. Flexible seal comprising a hole (14) intended to receive a rod (6) mounted for sliding and rotating with respect to the axis of the said rod (6), a central part (11) situated around the hole (14) and an external lip (13) situated around the central part (11) and intended to bear sealingly upon a substantially planar surface (30) substantially perpendicular to the axis of the rod (6), the seal comprising an intermediate part (12) situated between the hole (14) and the external lip (10), **characterised in that** the said intermediate part has a solid form of width (1) and height (h) of the same order of magnitude, the said intermediate part (12) being adapted to be moved parallel to the axis of the rod (6) in the direction of the said surface (30), by deformation of the external lip (13) around an end (131) connected to the intermediate part (12), so as to transmit forces parallel to the axis of the rod (6).

2. Seal according to claim 1, **characterised in that** the seal (1) comprises a recess (15) situated between the intermediate part (12) and the external lip (13).

3. Seal according to one of claims 1 or 2, **characterised in that** the central part (11) is an internal lip intended to grip the rod (6) sealingly and **in that** the intermediate part (12) is situated between the internal lip (11) and the external lip (13).

4. Seal according to one of claims 1 to 3, **characterised in that** the external lip (13) is a portion of a cylinder having as its axis the axis of the rod (6).

5. Seal according to any one of claims 1 to 3, **characterised in that** the free end (130) of the external lip (13) is further away from the axis of the rod (6) than the end (131) of the external lip (13) connected to the intermediate part (12).

6. Seal according to claim 5, **characterised in that** the external lip (13) is a portion of a cone having as its axis the axis of the rod (6), the external lip (13) being connected to the intermediate part (12) by the narrowest part of the cone.

7. Seal according to any one of claims 1 to 6, **characterised in that** the seal (1) has a diameter (Φ) of approximately two centimetres and a height (H) of approximately half a centimetre.

8. Seal according to any one of the preceding claims, **characterised in that** the seal (1) consists of a single material that is flexible.

9. Seal according to any one of the preceding claims, **characterised in that** the material is high-temperature silicone.

10. Seal according to any one of the preceding claims, **characterised in that** the height (h) of the intermediate part (12) is equal to substantially half of the total height (H) of the seal (1).

11. Seal according to any one of the preceding claims, **characterised in that** the height (h) of the intermediate part (12) is greater than three times the thickness (e) of the external lip (13).

12. Gas tap comprising a control knob (2) connected to the conduit (4) of the tap by a rod (6) having a combined movement of sliding along its axis and rotation about its axis when the knob (2) is actuated, **characterised in that** the tap also comprises, situated around the rod (6) and situated successively from the knob (2) towards the conduit (4) of the tap: a ring (5) fixed to the rod (6), a seal (1) according to any one of the preceding claims and an electric ignition pusher (3), an intermediate part (12) of the seal (1) being adapted to be moved parallel to the axis of the rod (6) so as to transmit to the electric pusher (3) the forces exerted by the ring (5) in a direction parallel (Z) to the rod (6) when the knob (2) is actuated.

13. Gas tap according to claim 12, **characterised in that** the seal (1) comprises an internal lip (11) whose dimensions are such that the seal (1) does not turn about the rod (6) when the knob (2) is actuated.
